# EUROPÄISCHE PATENTSCHRIFT

(11) **EP 3 698 217 B1**
(45) Veröffentlichungstag und Bekanntmachung des Hinweises auf die Patenterteilung: **06.05.2026**
(21) Anmeldenummer: 18789599.0
(22) Anmeldetag: 17.10.2018
(51) Int. Cl.: G03H 1/22, B60Q 1/26, G02B 5/32, F21V 8/00, F21S 41/24, F21S 41/32, G03H 1/02, G03H 1/26

(54) **LEUCHTEINRICHTUNG FÜR FAHRZEUGE**
ILLUMINATION DEVICE FOR VEHICLES
DISPOSITIF D'ÉCLAIRAGE POUR VÉHICULES

(30) Priorität: 18.10.2017 DE 102017124296
(43) Veröffentlichungstag der Anmeldung: 26.08.2020
(73) Patentinhaber: Carl Zeiss Jena GmbH, 07745 Jena (DE)
(72) Erfinder: THOMAE, Daniel, 07745 Jena (DE); KLEINDIENST, Roman, 99425 Weimar (DE); ERLER, Christoph, 07745 Jena (DE); VOJTISEK, Petr, 07749 Jena (DE); GATTO, Alexandre, 51429 Bergisch Gladbach (DE)
(74) Vertreter: Kraus & Lederer PartGmbB
(86) Internationale Anmeldenummer: PCT/EP2018/078420
(87) Internationale Veröffentlichungsnummer: WO 2019/076985

(56) Entgegenhaltungen:
- EP-A1- 0 452 815
- DE-A1- 102014 117 842
- JP-A- H08 108 793
- US-A- 5 634 708
- US-A- 5 711 592
- US-A1- 2014 268 867
- US-A1- 2015 220 058
- US-A1- 2016 033 705
- US-B1- 6 580 529

## Beschreibung

Die vorliegende Anmeldung betrifft Leuchteinrichtungen für Fahrzeuge, insbesondere Leuchteinrichtungen, welche als Signalleuchten wie Fahrtrichtungsanzeiger (Blinker) oder Bremslichter oder auch als Schlussleuchten (Rücklicht) verwendbar sind.

Leuchteinrichtungen werden in Fahrzeugen benutzt, um zum einen die Umgebung des Fahrzeugs zu beleuchten, um einem Fahrer des Fahrzeugs auch in Dunkelheit Sicht zu ermöglichen, und zum anderen, um andere Personen oder Fahrzeuge auf das mit der Leuchteinrichtung ausgerüstete Fahrzeug aufmerksam zu machen. Beispiele für derartige Leuchteinrichtungen sind Frontscheinwerfer, Schlussleuchten, Bremslichter oder Fahrtrichtungsanzeiger.

Neben ihrer technischen Funktion werden derartige Leuchteinrichtungen zunehmend auch dafür genutzt, beispielsweise Fahrzeugen einer bestimmten Marke ein unverwechselbares Aussehen zu geben. Dabei wird hauptsächlich die äußere Form derartiger Leuchteinrichtungen als Gestaltungsmerkmal genutzt. Zunehmend wird auch die Leuchtsignatur derartiger Leuchteinrichtungen charakteristisch ausgestaltet. Beispielsweise werden charakteristische Leuchtsignaturen bei Fahrzeugrückleuchten eingesetzt. Dabei existieren gleichzeitig immer schärfer definierte Randbedingungen bezüglich Bauraum und Anordnung am Fahrzeug, beispielsweise, um eine Laderaumbreite maximal ausnutzen zu können. Um die in den Beispielen erwähnten Einschränkungen zu umgehen bzw. um die vom Gesetzgeber und die vom Fahrzeugdesign geforderten Randbedingungen zu erfüllen, sind häufig stark angepasste optische Konzepte notwendig. Klassischerweise werden hier Spiegel, Prismen und makroskopische Streustrukturen eingesetzt, um gewünschte Leuchteinrichtungen zu realisieren.

In der deutschen Patentanmeldung DE 10 2016 117 969.8 der Anmelderin werden Vorrichtungen beschrieben, bei welchen mittels Hologrammen, insbesondere mittels Volumenhologrammen, Leuchtsignaturen erzeugt werden können. In dieser Anmeldung wird die Verwendung sowohl von Reflexionshologrammen als auch von Transmissionshologrammen beschrieben. Bei Transmissionshologrammen erfolgt die Beleuchtung des Hologramms aus einem Halbraum des Hologramms (d.h. von einer Seite des Hologramms), und die Betrachtung erfolgt aus dem anderen Halbraum (von der anderen Seite des Hologramms). Bei Reflexionshologrammen erfolgt hingegen die Beleuchtung von der gleichen Seite wie die Betrachtung. Dies kann, wenn wenig Bauraum zur Verfügung steht, schwierig zu realisieren sein, insbesondere wenn das Hologramm nahe der Außenseite des Fahrzeugs angeordnet werden muss, da dann eine Lichtquelle zur Beleuchtung des Hologramms außerhalb des Fahrzeugs angeordnet sein müsste. Auf der anderen Seite haben Reflexionshologramme den Vorteil, dass sie im Allgemeinen stärker wellenlängenselektiv arbeiten als Transmissionshologramme, d.h. nur Licht eines engen Wellenlängenbereichs wird als Leuchtsignatur abgebildet. Dies führt dazu, dass auch bei Verwendung einer relativ breitbandigen Lichtquelle wie einer roten Leuchtdiode die erzeugte Leuchtsignatur immer im Wesentlichen mit der gleichen Wellenlänge erscheint. Dies ist deswegen wünschenswert, da aufgrund von geringen Abweichungen der spektralen Empfindlichkeit roter und grüner Farbrezeptoren im Auge selbst kleine Wellenlängenänderungen zwischen ca. 550 nm und 640 nm zu einer deutlichen räumlichen Verschiebung der wahrgenommenen Farbe führen. Zudem kann bei Transmissions-Volumenhologrammen das Problem der sogenannten Übermodulation auftreten, was im Wesentlichen bedeutet, dass eine optimale Schichtdicke des Transmissionshologramms bei gegebener Geometrie und gegebener Brechzahlmodulation durch das Hologramm von der Wellenlänge abhängt, was zu Farbverschiebungen führen kann.

Eine weitere Leuchteinrichtung ist aus dem Dokument JP H08 108793 A bekannt.

Es ist daher eine Aufgabe der vorliegenden Erfindung, Leuchteinrichtungen bereitzustellen, welche auf Basis von Reflexionshologrammen arbeiten können und welche trotzdem eine kompakte Bauform aufweisen.

Diesbezüglich wird eine Leuchteinrichtung nach Anspruch 1 bereitgestellt. Die Unteransprüche definieren weitere Ausführungsformen.

Erfindungsgemäß wird eine Leuchteinrichtung für ein Fahrzeug bereitgestellt, umfassend:
eine Lichtquellenanordnung, welche angeordnet ist, Licht in Richtung eines ersten Halbraums abzustrahlen,
ein Reflexionshologramm, welches eingerichtet ist, bei Beleuchtung aus einer Richtung, welche in einem zu dem ersten Halbraum entgegengesetzten Halbraum zeigt, eine Leuchtsignatur zu erzeugen, und
einen Lichtleitkörper mit einem Strahlablenkungsabschnitt, welcher eingerichtet ist, das Licht von der Lichtquellenanordnung in der Richtung des zweiten Halbraums auf das Hologramm zu lenken.

Durch die Verwendung des Lichtleitkörpers kann die Lichtquelleneinrichtung neben dem Hologramm oder auf einer der Seite des Hologramms, die letztendlich beleuchtet wird, gegenüberliegenden Seite angeordnet sein, was den Einbau in Fahrzeuge erleichtert.

Der Strahlablenkungsabschnitt kann ausgestaltet sein, von der Lichtquellenanordnung als Kugelwelle ausgehendes Licht als ebene Welle auf das Hologramm zu lenken. In anderen Worten kann die Kugelwelle kollimiert werden.

Durch die Beleuchtung mit einer näherungsweise ebenen Welle (Planwelle) kann ein Hologramm gleichmäßig unter konstantem Winkel ausgeleuchtet werden. Zudem ist eine ebene Welle technisch gut prüfbar. Eine leichte Dezentrierung des Hologramms beim Einbau sowie auch eine leichte Verkippung hat bei Verwendung einer ebenen Welle keine unregelmäßige Verzerrung der erzeugten Leuchtsignatur zur Folge.

Der Strahlablenkungsabschnitt kann einen gekrümmten Spiegel umfassen, insbesondere einen Abschnitt eines Paraboloidspiegels, wobei der Spiegel als Off-Axis-Spiegel eingerichtet sein kann. So kann das Licht einfach auf das Hologramm gelenkt werden.

Alternativ kann der Strahlablenkungsabschnitt ein transmittives oder reflektives diffraktives Element, z.B. ein weiteres Hologramm, umfassen. Die Lichtquellenanordnung kann eine Mehrzahl von Lichtquellen umfassen, wobei der Strahlablenkungsabschnitt getrennte Abschnitte für die Mehrzahl von Lichtquellen umfasst. Die Abschnitte können dabei so eingerichtet sein, dass das Licht von allen Abschnitten aus der gleichen Richtung auf das Hologramm gestrahlt wird. So können größere Hologramme ausgeleuchtet werden und/oder höhere Leuchtdichten erreicht werden.

Die mehreren Abschnitte können auch so eingerichtet sein, Licht unter verschiedenen Winkeln auf das Hologramm zum wahlweisen Erzeugen verschiedener Leuchtsignaturen zu lenken. Auf diese Weise können verschiedene Leuchtfunktionen integriert werden.

Der Strahlablenkungsabschnitt kann eingerichtet sein, zumindest einen Teil des Lichts von der Lichtquellenanordnung über eine Reflexion an einer Seite des Lichtleitkörpers zu dem Hologramm zu lenken.

Die Seite kann dabei eine dem Hologramm gegenüberliegende Seite des Lichtleitkörpers umfassen.

Das Hologramm kann einen Abschnitt verringerter Effizienz aufweisen, wobei der Lichtleitkörper eingerichtet ist, von dem Abschnitt verringerter Effizienz nicht gebeugtes Licht zu einem weiteren Abschnitt des Hologramms zu lenken.

So können mit vergleichsweise dünnen Lichtleitkörpern größere Hologramme ausgeleuchtet werden. Auf diese Weise kann die Dicke des Lichtleitkörpers verringert werden.

Der Lichtleitkörper kann eine gekrümmte Lichteinkoppelfläche zum Einkoppeln von Licht von der Lichtquelle aufweisen, wobei ein Krümmungsmittelpunkt der Lichteinkoppelfläche am Ort einer Lichtquelle der Lichtquellenanordnung liegt. Auf diese Weise werden Brechungseffekte beim Einkoppeln des Lichtes minimiert, da Lichtstrahlen von der Lichtquelle im Wesentlichen senkrecht auf die Lichteinkoppelfläche treffen.

Der Lichtleitkörper kann auch eine bzw. die gekrümmte Lichteinkoppelfläche zum Einkoppeln von Licht von der Lichtquelle aufweisen, wobei eine Kombination aus der gekrümmten Lichteinkoppelfläche und des Strahlablenkungsabschnitts ausgestaltet ist, von der Lichtquellenanordnung als Kugelwelle ausgehendes Licht als ebene Welle auf das Hologramm zu lenken. Eine Kollimationsfunktion kann also gleichsam auf die Lichteinkoppelfläche und den Strahlablenkungsabschnitt "verteilt" werden, was eine größere Freiheit beim Design ermöglicht.

Der Lichtleitkörper kann in einem lichtleitenden Kern, d.h. einem Bereich in dem das Licht in dem Lichtleitkörper geführt wird, einen Brechungsindex von etwa 1 aufweisen, insbesondere mit Luft gefüllt sein. Der Brechungsindex kann aber auch ungleich 1 sein, wenn der lichtleitende Kern mit einem anderen Material als Luft gefüllt ist.

Die Lichtquellenanordnung kann durch eine oder mehrere näherungsweise Punktlichtquellen gebildet sein. Hierdurch kann eine Kollimation des Lichtes durch den Strahlablenkungsbereich oder andere Komponenten verbessert werden und/oder eine bessere Qualität der durch das Hologramm erzeugten Leuchtsignatur (z.B. geringeres "Verschmieren") erreicht werden.

Die Erfindung wird nachfolgend anhand von Ausführungsbeispielen unter Bezugnahme auf die beigefügte Zeichnung näher erläutert. Es zeigen:
Fig. 1 eine Schnittansicht einer Leuchteinrichtung gemäß einem Ausführungsbeispiel,
Fig. 2A und 2B Schnittansichten einer Leuchteinrichtung nach weiteren Ausführungsbeispielen,
Fig. 3A und 3B mögliche Ansichten der Leuchteinrichtung der Fig. 2A aus einer anderen Richtung,
Fig. 4 eine Schnittansicht einer Leuchteinrichtung gemäß einem weiteren Ausführungsbeispiel,
Fig. 5 eine Schnittansicht einer Leuchteinrichtung gemäß einem weiteren Ausführungsbeispiel,
Fig. 6 eine Schnittansicht einer Leuchteinrichtung gemäß einem weiteren Ausführungsbeispiel,
Fig. 7A-7C Ansichten einer Leuchteinrichtung gemäß einem weiteren Ausführungsbeispiel,
Fig. 8 eine Ansicht einer Leuchteinrichtung gemäß einem weiteren Ausführungsbeispiel,
Fig. 9 eine Schnittansicht einer Leuchteinrichtung gemäß einem weiteren Ausführungsbeispiel, und
Fig. 10 eine Schnittansicht einer Leuchteinrichtung gemäß einem weiteren Ausführungsbeispiel.

Im Folgenden werden verschiedene Ausführungsbeispiele unter Bezugnahme auf die beigefügte Zeichnung erläutert. Es ist zu bemerken, dass diese Ausführungsbeispiele nur der Veranschaulichung dienen und nicht als einschränkend auszulegen sind. Elemente verschiedener Ausführungsbeispiele können auch miteinander kombiniert werden, um weitere Ausführungsbeispiele zu bilden. Variationen, Abwandlungen und Details, die für Komponenten eines der Ausführungsbeispiele beschrieben sind, sind auch auf entsprechende Komponenten anderer Ausführungsbeispiele anwendbar.

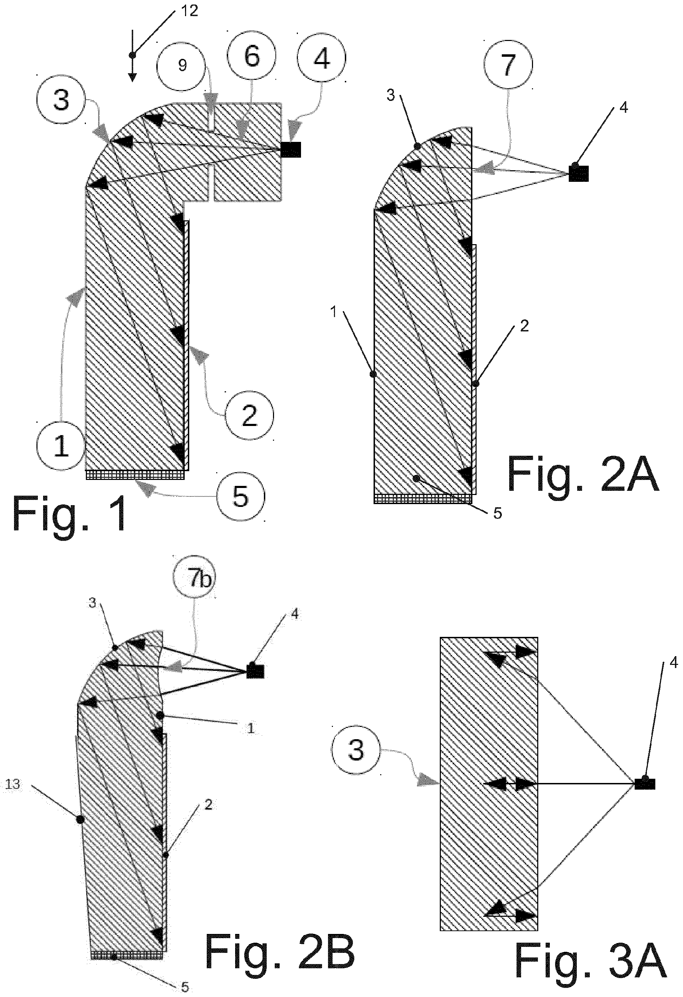

Fig. 1 zeigt eine Schnittansicht einer Leuchteinrichtung gemäß einem Ausführungsbeispiel. Die Leuchteinrichtung der Fig. 1 umfasst eine Lichtquellenanordnung 4, welche beispielsweise eine oder mehrere Leuchtioden aufweisen kann. Zudem weist die Vorrichtung der Fig. 1 ein Reflexionshologramm 2 auf, das bei Beleuchtung durch Licht von der Lichtquellenanordnung 4 eine Leuchtsignatur erzeugt, d.h. das Licht beugt bzw. gerichtet streut, um einen gewünschten Leuchteindruck hervorzurufen.

Bei dem Ausführungsbeispiel der Fig. 1 gelangen Strahlenbündel 6 von der Lichtquellenanordnung 4 in einen Lichtleitkörper 1, welcher einen Strahlablenkungsbereich 3 aufweist. In dem Strahlablenkungsbereich 3 werden die Strahlenbündel 6 derart abgelenkt, dass sie das Reflexionshologramm beleuchten. Ein Bild entsteht dann auf der gleichen Seite, d.h. in dem gleichen Halbraum, von dem aus auch die Beleuchtung erfolgt, in der Fig. 1 also auf der linken Seite des Reflexionshologramms 2. Die Lichtquellenanordnung 4 kann auf diese Weise angeordnet sein, in Richtung eines in Fig. 1 links befindlichen Halbraums abzustrahlen, und durch den Lichtleitkörper 1 mit dem Strahlablenkungsbereich 3 wird das Hologramm dennoch unter einem passenden Winkel eines in Richtung des in Fig. 1 rechts befindlichen Halbraums beleuchtet. So kann die Leuchteinrichtung an einer Außenseite eines Fahrzeugs angeordnet werden. Bevorzugt liegt die Brechzahl des Lichtleitkörpers 1 dabei möglichst nahe an der Brechzahl des Hologramms 2 sowie eventuell vorhandener Träger- oder Klebeschichten, um Reflexionsverluste an internen Grenzflächen gering zu halten.

Der Strahlablenkungsbereich 3 ist dabei bevorzugt so ausgestaltet, dass das Licht von der Lichtquelleneinrichtung 4, welches in dem dargestellten Beispiel im Wesentlichen einem Strahlenbündel 6 von einer Punktlichtquelle entspricht, in eine ebene Welle (Planwelle) umgewandelt werden, die unter einem Winkel auf das Reflexionshologramm 2 trifft. Das Reflexionshologramm 2 weist einen entsprechenden Akzeptanzbereich auf, so dass das Licht, welches unter diesem Winkel auf das Reflexionshologramm 2 trifft, ein entsprechendes Bild erzeugt. Dies kann z.B. dadurch erreicht werden, dass bei der Herstellung des Hologramms ebenfalls aus diesem Winkel belichtet wird.

Die Verwendung von zumindest näherungsweise ebenen Wellen bei der Beleuchtung des Hologramms 2 hat verschiedene Vorteile. Da der Einfallswinkel bei einer Beleuchtung mit ebenen Wellen in Kombination mit einem planen Hologramm 2 über die gesamte Fläche des Hologramms identisch bleibt, ist keine Abnahme einer lokalen Beleuchtungsstärke auf dem Hologramm 2 durch die Projektion des Lichts von der Lichtquellenanordnung 4 auf die Fläche des Hologramms vorhanden. Zudem hat eine leichte Dezentrierung des Hologramms beim Einbau oder eine leichte Kippung keine unregelmäßige Verzerrung des durch das Hologramm erzeugten Signals, d.h. der Leuchtsignatur, zur Folge. Schließlich ist eine ebene Welle technisch gut prüfbar, womit eine klare Schnittstelle zwischen dem Lichtleitkörper 1 und dem Hologramm 2, welches z.B. eine Folie sein kann, definiert ist.

Ein mögliches Problem bei einer Beleuchtung mit ebenen Wellen besteht in der Restdivergenz der von dem Strahlablenkungsbereich 3 ausgehenden näherungsweise kollimierten ebenen Welle, welche aus der endlichen Brennweite des Strahlablenkungsbereichs 3 sowie der endlich kleinen Leuchtfläche der Lichtquelleneinrichtung 4 resultiert. In anderen Worten weist die Lichtquelleneinrichtung 4 ein gewisses Volumen auf, aus dem Licht emittiert wird, was einer entsprechenden von dem Strahlablenkungsbereich "gesehenen" Leuchtfläche entspricht. Die Verwendung ausgedehnterer Lichtquelleneinrichtungen 4, wie sie z.B. eine Wolfram-Wendel einer Halogen-Lampe darstellt, resultiert in einer Verschmierung der im Hologramm gespeicherten Streufunktion. Daher ist im Rahmen dieser Anmeldung die Verwendung von Lichtquelleneinrichtungen bevorzugt, welche näherungsweise Punktlichtquellen verwenden. Unter näherungsweisen Punktlichtquellen, vereinfacht auch kurz als Punktlichtquellen bezeichnet, werden im Rahmen dieser Anmeldung Lichtquellen verstanden, deren Leuchtfläche kleiner als 4mm², insbesondere kleiner als 2mm², bevorzug kleiner als 1,1mm² und insbesondere kleiner als 0,3mm² ist. Die Leuchtfläche ist diejenige Fläche, aus der die näherungsweise Punktlichtquelle in Richtung des Lichtleitkörpers 1, z.B. "gesehen" von dem Strahlablenkungsbereich 3 , Licht emittiert. Derartige näherungsweise Punktlichtquellen sind beispielsweise handelsübliche Leuchtdioden (LEDs), bei denen die Lichtemission in einem kleinen Bereich eines pn-Übergangs erzeugt wird.

Der Strahlablenkungsbereich 3 kann also insbesondere als ein oder mehrere Kollimatoren dienen, um Licht von einer oder mehreren Lichtquellen als ebene Welle, d.h. ins Unendlich, abzubilden.

Der Strahlablenkungsbereich 3 kann insbesondere als Spiegel ausgestaltet sein, insbesondere als Off-Axis-Spiegel (d.h. die Symmetrieachse der Beleuchtung stimmt nicht mit der Symmetrieachse des Spiegels überein), beispielsweise ein Off-Axis-Paraboloidspiegel. Grundsätzlich sind jedoch auch andere Arten von Spiegeln, z.B. Ellipsoidspiegel, möglich. Zudem kann eine Blende 9 zur Strahleinengung bereitgestellt sein. Die Nutzung von Off-Axis-Spiegeln hat den Vorteil, dass die Lichtquellen der Lichtquellenanordnung besser durch große Kühlkörper gekühlt werden können, was bei im Automobilbereich verwendeten Hochleistungsleuchtdioden häufig nötig ist. Bei einem On-Axis-Paraboloid-Spiegelsegment würde ein derartiger Kühlkörper das kollimierte Strahlenbündel beschneiden.

An einem Ende des Lichtleitkörpers 1 ist zudem eine Fläche 5 bereitgestellt, welche zu ihr gelangendes Licht absorbiert, um ein unkontrolliertes Austreten von Licht sowie unerwünschte Störlichteffekte durch Mehrfachreflexionen im Lichtleitkörper 1 zu verhindern oder zumindest zu minimieren. Die Fläche 5 stellt hierbei nur eine beispielhafte Anordnung eines Lichtabsorbers dar. Ein Lichtabsorber kann z.B. auch in einem von 90° abweichenden Winkel zu einer Fläche des Hologramms 2 angeordnet werden, um z.B. residuale Restreflexen einer absorbierenden Lackierung nicht in Richtung des Fahrzeugäußeren zu lenken. Der Lichtleitkörper kann auch an anderen, nicht für die optische Funktion erforderlichen Grenzflächen, mit einer Absorberschicht versehen werden.

Das Ausführungsbeispiel der Fig. 1 dient im Folgenden als Basis für weitere Ausführungsbeispiele, die Variationen und Abwandlungen beschreiben. Gleiche Elemente werden dabei zur Vermeidung von Wiederholungen mit gleichen Bezugszeichen bezeichnet.

Bei einer Verwendung eines Off-Axis-Paraboloidspiegels als Strahlablenkungsbereich 3 ist bevorzugt der Raum zwischen der Lichtquellenanordnung 4 und dem Strahlablenkungsbereich 3 in einem Medium (Material) homogener Brechzahl, welche der Brechzahl des Lichtleitkörpers entspricht, ausgeführt. Wie in Fig. 2A verdeutlicht ist, kann davon auch abgewichen werden, weil z.B. Bauraum oder Gewicht gespart werden soll. In Fig. 2A ist der erste Teil des Weges von der Lichtquellenanordnung 4 zum Strahlablenkungsbereich 3 mit einem ersten Medium gefüllt, dies kann z.B. Luft mit der Brechzahl n=1,0 sein, sowie ein zweiter Teil des Wegs mit dem Medium des Lichtleitkörpers. Letztgenannter kann ohne Beschränkung der Allgemeinheit z.B. ein Kunststoff mit der Brechzahl n≈1,5 sein, jedoch sind auch andere Materialien mit anderen Brechzahlen möglich.

Damit die das Hologramm 2 beleuchtende Welle weiterhin eine ebene Welle darstellt, muss der Strahlablenkungsbereich 3 und/oder die Einkoppelfläche von Licht aus der Lichtquellenanordnung 4 in den Lichtleitkörper 1, welche mit dem Bezugszeichen 7 bezeichnet ist, im Vergleich zu Fig. 1 abgewandelt werden. Die Einkoppelfläche 7 ist dabei in Fig. 2A als plane Fläche ausgeführt, wobei die Oberflächennormale der Einkoppelfläche 7 senkrecht auf dem Hauptstrahl des von der Lichtquellenanordnung 4 auf den Strahlablenkungsbereich 3 abgestrahlten Bündels steht. Durch die Brechung der Strahlen, welche vom Lichtquellenanordnung 4 stammen, an der Einkoppelfläche 7 entsteht sphärische Aberration, so dass durch die Verwendung eines Off-Axis-Paraboloiden im Strahlablenkungsbereich 3 keine plane Welle in Richtung des Hologramms 2 entsteht, sondern eine mit dem Wellenfrontfehler sphärische Aberration versehene ebene Welle. Dies kann bei hinreichend großer sphärischer Aberration zu einer Verzerrung der im Hologramm gespeicherten und bei Beleuchtung wiedergegebenen Leuchtsignatur führen.

Dieses Problem kann in Fig. 2A einerseits dadurch gelöst werden, dass der Spiegel im Strahlablenkungsbereich durch einen Freiformspiegel ersetzt wird, welcher geringfügig von der Form eines Off-Axis-Paraboloidspiegels abweicht, um den Wellenfrontfehler zu korrigieren. Wird die Einkoppelfläche 7 zum Hauptstrahl des von der Lichtquellenanordnung 4 auf den Strahlablenkungsbereich 3 abgestrahlten Bündels verkippt, entstehen darüber hinaus zusätzliche Wellenfrontaberrationen wie z.B. Koma und Astigmatismus, welche ebenfalls durch einen geeigneten Freiformspiegel in der Strahlablenkungsanordnung 3 korrigiert werden können.

Eine weitere Korrekturmöglichkeit zur Minimierung der sphärischen Aberration und andere Wellenfrontfehler durch Brechung an der Einkoppelstelle 7 besteht in der Absenkung der Brechzahl des Lichtleitkörpers 1 in Fig. 2A, die im Grenzfall n=1,0 erreichen kann, was einem mit Luft gefüllten Hohlkörper entspricht. Nachteilig an dieser Lösung ist die beschränkte Materialauswahl für das Trägermaterial des Hologramms, wofür nur wenige kommerziell verfügbare Materialien zur Verfügung stehen, die oft eine Brechzahl um n=1,5 oder n=1,6 besitzen. Weicht die Brechzahl des Lichtleitkörpers 1 stark von der Brechzahl des Materials des Hologramms 2 ab, geht viel Licht durch Fresnelverluste an der Grenzfläche zwischen dem Lichtleitkörper 1 und dem Hologramm 2 verloren.

Die Fig. 2B zeigt ein alternatives Ausführungsbeispiel, das den Wellenfrontfehler, der durch Zurücklegen eines Teils der Strecke zwischen Lichtquellenanordnung 4 und Strahlablenkanordnung 3 in einem Medium anderer Brechzahl als jenes des Lichtleitkörpers 1A entsteht, durch eine Anpassung der Einkoppelfläche 7b kompensiert. Die Fläche 7b ist hierbei konzentrisch zur Lichtquelle 4 ausgeführt, d.h. der Krümmungsmittelpunkt von 7b liegt in der Lichtquelle 4. Jeder der Strahlen, welcher von der Lichtquelle 4, welche näherungsweise als Punktlichtquelle zu betrachten ist, zum Strahlablenkungsbereich 3 propagiert, trifft dabei senkrecht auf die Einkoppelfläche 7b, so dass keine Aberrationen durch den Übertritt vom Umgebungsmedium, wie z.B. Luft, in den Lichtleitkörper 1 entstehen. Die Form der Einkoppelfläche stellt also einen Freiheitsgrad beim Design dar, der im Falle der Einkoppelfläche 7b zur Kompensation von Wellenfrontfehlern genutzt wird.

Dieser Freiheitsgrad kann jedoch auch andersweitig genutzt werden, um die Kollimationsfunktion zur Kollimation des von der Lichtquelle 4 ausgehenden Lichts im Wesentlichen beliebig zwischen der Einkoppelfläche 7b und dem Strahlablenkungsbereich 3 zu verteilen. Eine Möglichkeit ist, die Einkoppelfläche 7b als konvexe Linsenfläche auszubilden und so die Kollimation an dieser Fläche durchzuführen, womit der Strahlablenkungsbereich 3 mit einem Krümmungsradius von unendlich behaftet wäre, was einem Planspiegel entspricht. Die Aufteilung zwischen beiden Flächen kann auch für verschiedene Richtungen der von der Lichtquelle 4 emittierten Kugelwelle vorgenommen werden, so dass z.B. die Einkoppelfläche eine konvexe Zylinderfläche aufweist, welche die Kollimation in einer ersten Richtung (einem ersten Schnitt) durchführt, und der Strahlablenkungsbereich 3 eine Zylinder-ähnliche Form aufweist, der eine Kollimation ein eine zweite Richtung (einem zweiten Schnitt) durchführt. Die erste Richtung und die zweite Richtung können näherungsweise senkrecht (z.B. 90° +/- 5° oder +/- 1°) zueinander sein, was bedingt, dass die Zylinderachsen der Einkoppelfläche und des Strahlablenkungsabschnitts ebenfalls näherungsweise senkrecht zueinander stehen.

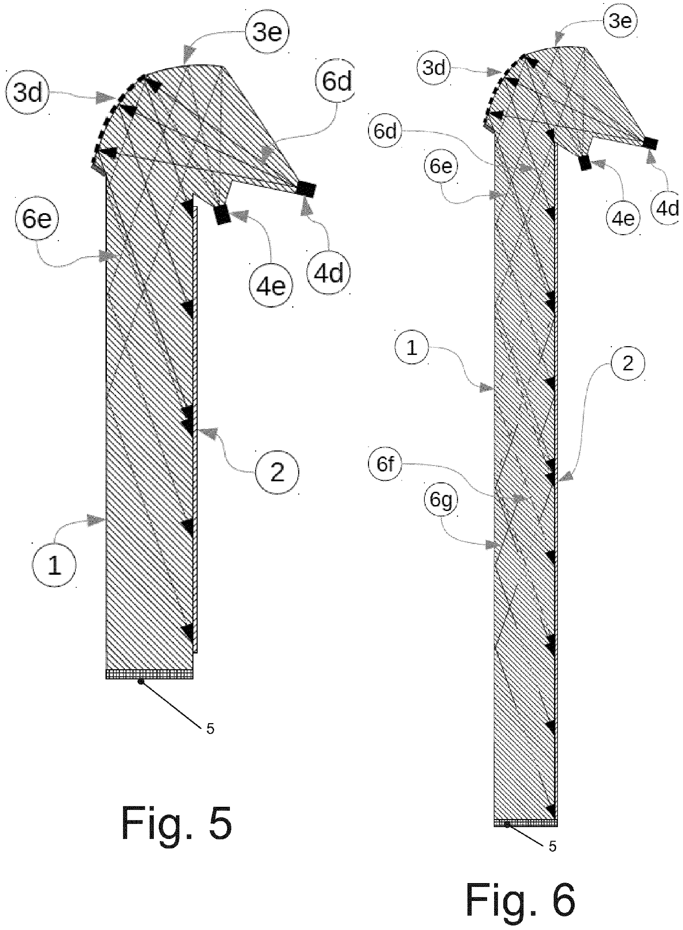

Weiterhin ist Austrittsfläche, bezeichnet mit 13, durch welche vom Hologramm gebeugtes Licht die Leuchte verlässt, abgeändert. Die Austrittsfläche 13 kann dabei, wie in Fig. 2B dargestellt, eben und zum Hologramm 2 geneigt sein. Jedoch sind auch andere Formen, insbesondere Sphären, Zylinder oder Toroide-Oberflächen der Austrittsfläche 13 möglich. Diese Formen erhöhen die Effizienz beim Auskoppeln der Strahlung nach Beugung am Hologramm 2 in Richtung des Fahrzeugäußeren. Wird die Austrittsfläche 13 als Zylinder ausgeführt, dessen Achse im eingebauten Fahrzeug z.B. nach oben zeigt, so ist es bevorzugt, auch die Fläche des Hologramms 2 in gleicher Weise zu krümmen, um die Materialstärke des Lichtleiterkörpers konstant zu halten. Wird ferner dieser Ansatz mit dem in Fig. 6 gezeigten kombiniert, kann die Form der Austrittsfläche 13 mit der Form der Fläche des Hologramms 2, die gleichzeitig die rückseitige Begrenzung der Lichtleitkörpers darstellt, gekoppelt sein. Im Fall einer z.B. zylindrisch ausgeführten Austrittsfläche 13 mit z.B. vertikal stehender Zylinderachse kann bei einem derartigen Ausführungsbeispiel auch die Fläche des Hologramms 2 als Zylinderfläche ausgeführt sein, wobei bei einem derartigen Ausführungsbeispiel die Zylinderachsen der Austrittsfläche 13 und der Fläche des Hologramms 2 bevorzugt übereinander liegen.

Bei anderen Ausführungsformen kann der Lichtleitkörper 1 ein mit Luft gefüllter Hohlkörper sein. In diesem Fall weist ein lichtleitender Kern des Lichtleitkörpers 1 also einen Brechungsindex von 1 auf. Im Fall eines derartigen mit Luft gefüllten Hohlkörpers ist die Auskoppelfläche für das Lichtsignal, durch welches vom Hologramm gebeugtes Licht in Richtung des Fahrzeugäußeren abgestrahlt wird (siehe 13 in Fig. 2B), funktionslos. Somit können diese und andere Grenzflächen des Lichtleitkörpers, welche keine optische Funktion erfüllen, entfallen oder z.B. im Fall der Auskoppelfläche 13 in Fig. 2B in Form einer vom eigentlichen Lichtleitkörper separierten Außenlichtscheibe umgesetzt werden. Lediglich optische Funktionsflächen wie die Strahlablenkungsanordnung 3, der Absorber 5 oder das Hologramm 2 müssen in solch einem mit Luft gefüllten Hohlkörper vorhanden sein, womit der Körper dann mehrere Öffnungen nach außen aufweisen kann.

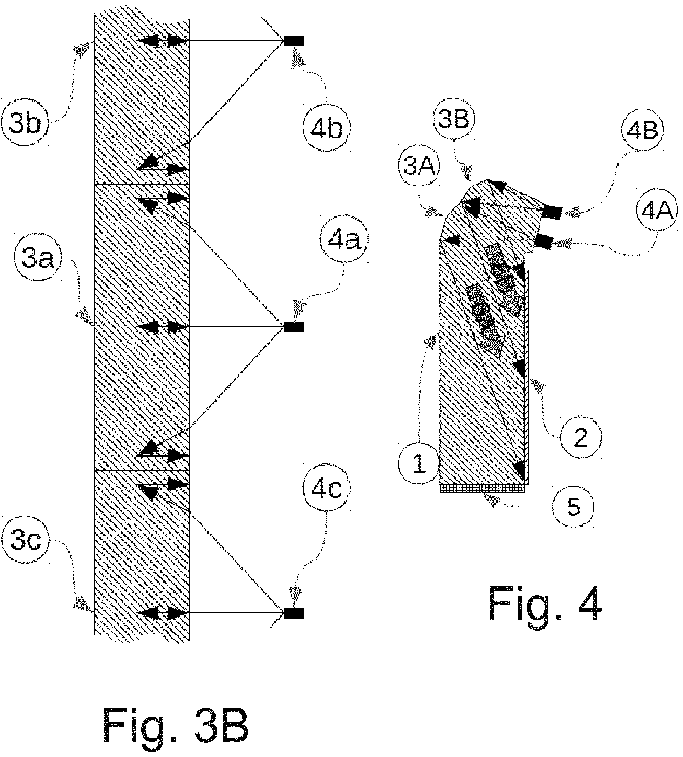

Die Lichtquellenanordnung 4 kann wie erwähnt eine oder auch mehrere Lichtquellen umfassen. Dies wird nun unter Bezugnahme auf die Fig. 3A und 3B veranschaulicht. Die Fig. 3A und 3B zeigen dabei Draufsichten auf die Vorrichtung der Fig. 1 oder 2A in Richtung eines Pfeils 12 der Fig. 1.

Die Fig. 3A zeigt eine Anordnung mit einer einzigen Lichtquelle 4, die in dem Strahlablenkungsbereich 3 wie in Fig. 3A schematisch gezeigt wird (vgl. auch Fig. 1, 2A). Die Fig. 3B zeigt hingegen drei nebeneinander angeordnete Lichtquellen 4a, 4b, 4c, welche in verschiedenen Abschnitten 3a, 3b, 3c des Strahlablenkungsbereichs reflektiert werden.

Zu bemerken ist, dass die Anzahl von drei Lichtquellen 4a-4c in Fig. 3B nur als Beispiel zu verstehen ist und auch nur zwei Lichtquellen oder mehr als drei Lichtquellen verwendbar sind. Die Lichtquellen 4a-4c sowie die zugehörigen Strahlablenkungsabschnitte 3a-3c sind in Fig. 3B in einer Linie angeordnet. Im Fall einer Anordnung auf einem zylindrisch gebogenen Wellenleiter, sind die Lichtquellen 4a-4c sowie die Strahlablenkungsabschnitte 3a-3c strahlenförmig um den Mittelpunkt des Zylindermantels ausgerichtet. Es sind also verschiedene Anordnungen möglich.

In der Fig. 3B sind die Lichtquellen 4a-4c in der Ansicht der Fig. 1 oder 2 hintereinander angeordnet. Weitere Möglichkeiten der Anordnung mehrerer Lichtquellen werden nun unter Bezugnahme auf die Fig. 4-6 erläutert.

In Fig. 4 ist eine Schnittansicht einer Leuchteinrichtung gemäß einem Ausführungsbeispiel entsprechend der Ansicht der Fig. 1 und 2 gezeigt. Bei dem Ausführungsbeispiel der Fig. 4 umfasst die Lichtquellenanordnung 4 zwei Lichtquellen 4a, 4b, deren Lichtstrahlen als Strahlenbündel 6a, 6b von jeweils zugeordneten Teilen 3a, 3b des Strahlablenkungsbereichs 3 abgelenkt werden. Insbesondere können die Bereiche 3a, 3b jeweils Off-Axis-Spiegel wie Off-Axis-Paraboloidspiegel sein. Es sind jedoch auch, wie in Fig. 2B gezeigt, Kombinationen aus refraktiven und reflektiven Elemente möglich. Dabei kann, entsprechend zu Fig. 4, jede Lichtquelle eine eigene refraktive Einkoppelfläche besitzen, sie können jedoch auch eine gemeinsame Einkoppelfäche besitzen.

Durch die Verwendung mehrere Lichtquellen kann insgesamt eine höhere Lichtstärke erzielt werden, und zudem kann der gesamte Abstrahlbereich der Lichtquellenanordnung bei gleichbleibender Brennweite der einzelnen Strahlablenkungsbereiche vergrößert werden, so dass auch größere Hologramme mit vergleichsweise kleinem Bauraum vollständig ausgeleuchtet werden können. Zudem kann auch eine höhere Leuchtdichte erzielt werden, z.B. für eine Anwendung als Bremslicht.

Auch bei dem Ausführungsbeispiel der Fig. 4 ist die Anzahl von zwei Lichtquellen 4a, 4b nur als Beispiel zu verstehen, und es können auch mehr Lichtquellen bereitgestellt sein.

Die Fig. 5 zeigt ein weiteres Ausführungsbeispiel. Bei dem Ausführungsbeispiel der Fig. 5 umfasst die Lichtquellenanordnung zwei Lichtquellen 4d, 4e. Lichtstrahlen von den Lichtquellen 4d, 4e werden von jeweiligen Abschnitten 3d, 3e des Strahlablenkungsabschnitts 3 reflektiert. Die Abschnitte 3d, 3e können wiederum jeweils Off-Axis-Spiegel sein. Die Strahlenbündel 6e, welche von der Lichtquelle 4e ausgehen, werden dabei von dem Abschnitt 3e zu einer Vorderseite, d.h. einer dem Hologramm 2 gegenüberliegenden Seite, des Lichtleitkörpers 1 reflektiert, an dieser Vorderseite nochmals reflektiert und gelangen dann zum Hologramm 2. Strahlenbündel 6d von der Lichtquelle 4d werden dem Abschnitt 3d direkt zu dem Hologramm 2 reflektiert. Die Reflexion an der Vorderseite des Lichtleitkörpers 1 stellt entsprechende Sauberkeitsanforderungen und Kratzfreiheitsanforderungen an die Vorderseite des Lichtleitkörpers 1, kann aber helfen, die Dicke des Lichtleitkörpers 1 bei gleichzeitiger Ausleuchtung eines vergleichsweise großflächigen Hologramms 2 zu reduzieren. Wiederum ist die Anzahl von zwei Lichtquellen 4d, 4e nur als Beispiel zu verstehen, und es sind auch mehr als zwei Lichtquellen oder auch eine einzige Lichtquelle möglich.

Ein weiteres Ausführungsbeispiel ist in Fig. 6 gezeigt, welches auf dem Ausführungsbeispiel der Fig. 5 basiert und dieses erweitert. Die Beleuchtung mittels zweier Lichtquellen 4d, 4e und entsprechend zwei Abschnitten 3d, 3e des Strahlablenkungsbereichs entspricht dem der Fig. 5.

Bei der Ausführungsform der Fig. 6 fallen also ebenso die Strahlenbündel 6d, 6e auf das Hologramm. Im Gegensatz zu der Fig. 5 ist das Hologramm 2 dort, wo die Strahlenbündel 6d, 6e auftreffen, derart ausgestaltet, dass es eine Effizienz deutlich kleiner als 100 %, beispielsweise in der Größenordnung von 50 %, z.B. zwischen 45 % und 55 %, beispielsweise etwa 49 % aufweist. Es wird also nur ein Teil der Strahlenbündel 6d, 6e durch das Hologramm 2 gebeugt, um die Leuchtsignatur zu erzeugen. Der übrige Anteil der Strahlenbündel 6d, 6e wird auf der Rückseite des Lichtleiters 1 (der rechten Seite in Fig. 6) als Strahlenbündel 6f, 6g totalreflektiert und nochmals an der Vorderseite totalreflektiert, um einen weiteren Teil des Hologramms 2 (in der Darstellung der Fig. 6 der untere Teil) zu beleuchten. Dieser weitere Teil weist dann bevorzugt eine höhere Effizienz, beispielsweise bei oder nahe bei 100 %, auf, um die Strahlbündel 6f und 6g, d.h. den zunächst reflektierten Teil der Strahlung (beispielsweise ungefähr 50 % der ursprünglichen Strahlung) möglichst vollständig zu nutzen.

Mit der Anordnung der Fig. 6 können auch größere Hologramme 2 mit vergleichsweise dünnen Lichtleitkörpern 1 ausgeleuchtet werden. Nachteil ist, dass das Hologramm 2 typischerweise in dem Bereich niedrigerer Effizienz (im oberen Teil der Fig. 6) einen wellenlängenabhängigen und einen beugungswinkelabhängigen Effizienzverlauf aufweist. Dies kann dazu führen, dass die Wiedergabe der Leuchtsignatur durch den oberen Bereich des Hologramms hinsichtlich des Farbeindrucks von der Wiedergabe der Leuchtsignatur durch den unteren (von den Strahlenbündel 6f und 6g beleuchteten) Bereich abweichen kann. Das Prinzip von Fig. 6 kann auch mit dem von Fig. 3B dahingehend kombiniert werden, dass die beleuchtete Welle anstatt über die zwei Lichtquellen 4d und 4e (mit den jeweils zugeordneten Strahlablenkungsbereichen 3d und 3e) über nur eine Lichtquelle (4a, ...) bereitgestellt wird. Bei gleich bleibendem Strahlquerschnitt kann dafür der Strahlablenkungsbereich 3a dann breiter ausgeführt werden. Die Verjüngung auf den angestrebten dünnen Lichtleitkörper im Bereich des Hologramms 2 kann dann an jener Stelle geschehen, wo die Strahlen 6d den letzten Kontakt mit der Auskoppelfläche 13 aufweisen.

Die unter Bezugnahme auf Figuren 1-5 dargestellten Ausführungsformen sind auch anders kombinierbar. Beispielsweise können Lichtquellen entsprechende Bereiche des Strahlablenkungsabschnitts 3 (beispielsweise Facetten eines Paraboloidspiegels) sowohl in der Ansicht der Fig. 4 nebeneinander als auch in der Draufsicht wie in Fig. 3B nebeneinander angeordnet sein, so dass sich ein zweidimensionales Array von Lichtquellen ergibt.

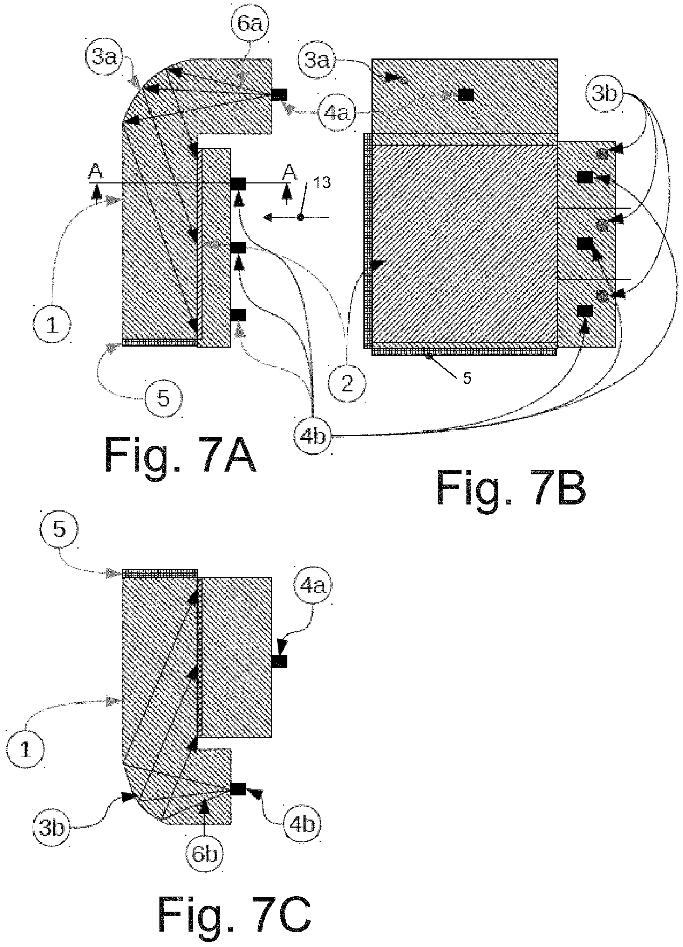

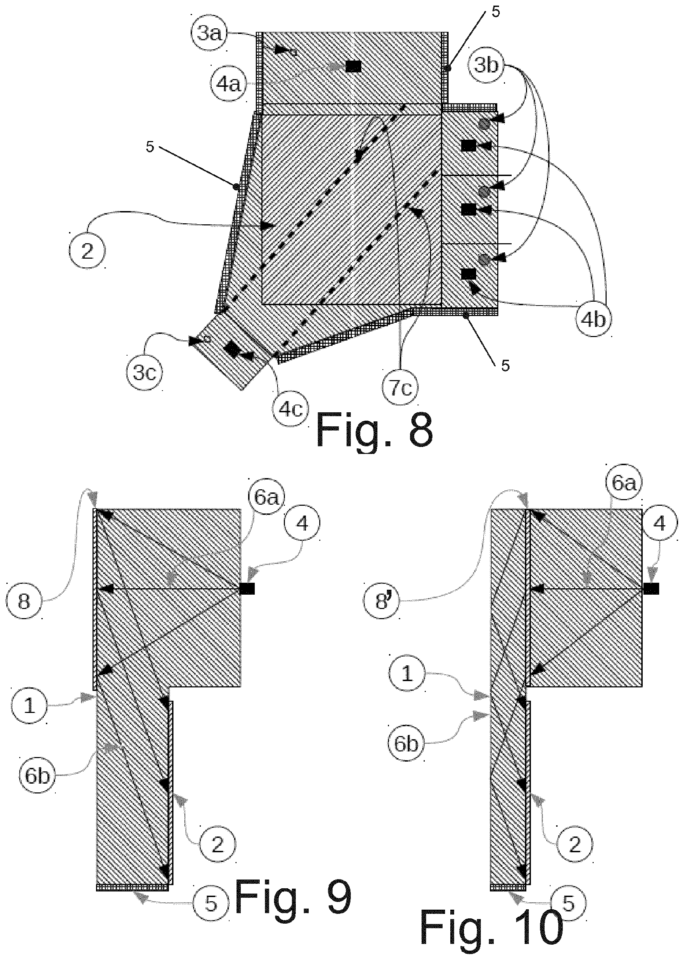

In den Figuren 1-5 sind Leuchteinrichtungen gezeigt, die eine Funktion in einem Kraftfahrzeug erfüllen können, beispielsweise als Rücklicht, Bremslicht oder Blinker dienen können. In modernen Heckleuchten sind oft mehrere Funktionen wie beispielsweise Schlusslicht, Bremslicht und Fahrtrichtungsanzeiger integriert. Eine derartige Integration ist auch bei Heckleuchten erwünscht, die Hologramme zur Bilderzeugung, insbesondere Reflexionshologramme wie unter Bezugnahme auf die Figuren 1-5 erläutert, verwenden. Entsprechende Ausführungsbeispiele werden nun unter Bezugnahme auf die Figuren 7 und 8 erläutert.

Die Fig. 7A zeigt eine Seitenansicht einer Leuchteinrichtung entsprechend der Ansicht der Fig. 1, die Fig. 7B zeigt eine Ansicht aus der Richtung eines Pfeils 13 der Fig. 7A auf die Leuchteinrichtung der Fig. 7A, und die Fig. 7C zeigt eine Schnittansicht entlang einer Linie A-A der Fig. 7A. Die Figuren 7A-7C werden zusammenfassend im Folgenden auch als Fig. 7 bezeichnet.

Bei diesem Ausführungsbeispiel ist eine Hologramm 2 bereitgestellt, welches mehrere holographische Strukturen enthält, wobei jede davon nur dann effizient beugt, d.h. eine Leuchtsignatur erzeugt, wenn die einfallende Strahlung aus einer bestimmten Einfallsrichtung kommt. Hier wird also die Winkelselektivität von Hologrammen ausgenutzt.

In der Fig. 7, wie insbesondere in der Fig. 7A zu sehen ist, wird Licht von einer Lichtquelle 4a über einen Strahlablenkungsabschnitt 3a in Fig. 7A unter einem Winkel von oben auf das Hologramm 2 gelenkt. Der Strahlablenkungsabschnitt 3a kann einen Off-Axis-Spiegel als Kollimator umfassen, wie bereits erläutert. Diese Beleuchtung entspricht im Wesentlichen der in Fig. 1 und 2 dargestellt Beleuchtung. Statt einer einzigen Lichtquelle 4a können auch mehrere nebeneinander angeordnete Lichtquellen 4a wie in der Fig. 3B gezeigt verwendet werden.

Zudem sind bei dem Ausführungsbeispiel der Fig. 7 mehrere Lichtquellen 4b bereitgestellt, welche das Hologramm über einen Strahlablenkungsabschnitt 3b, welcher wiederum einen oder mehrere Off-Axis-Paraboloidspiegel als Kollimatoren aufweisen kann, aus einer zweiten Richtung beleuchtet, wie insbesondere in Fig. 7C ersichtlich. Durch die Lichtquelle 4a erfolgt also die Beleuchtung unter einem anderen Winkel als durch die Lichtquelle 4b. Wegen der Winkelselektivität von Hologrammen können durch die verschiedenen Beleuchtungen verschieden holographische Strukturen in dem Hologramm 2 angesprochen werden und somit verschiedene Signaturen erzeugt werden. Durch die Brennweiten von als Kollimatoren verwendeten Strahlablenkungsabschnitten 3a, 3b sowie die durch die Anzahl verwendeter Lichtquellen 4a, 4b sowie durch die emittierte Strahlstärke der Lichtquellen 4a und 4b kann jeweils die Beleuchtungsstärke auf dem Hologramm, d.h. die Leuchtdichte variieren. So kann beispielsweise für eine Bremslichtfunktion eine höhere Leuchtdichte bereitgestellt werden als für ein Schlusslicht, da für eine Bremsleuchte durch Vorschriften eine höhere Leuchtdichte erforderlich ist.

Die getrennten Hologrammfunktionen können dabei in einer gemeinsamen Hologrammschicht angebracht sein (zum Beispiel durch sequentielles Belichten bei der Hologrammherstellung aus verschiedenen Richtungen), zumindest sofern sie mit der gleichen Wellenlänge (beispielsweise rotes Licht) arbeiten und eine hohe Effizienz der Reflexionshologramme angestrebt wird. Es sind aber auch zwei Hologramme in zwei getrennten Schichten für beide Hologrammfunktionen verwendbar, welche als Schichtstapel als Hologramm 2 verbaut werden.

Die Fig. 8 zeigt eine Erweiterung des Ausführungsbeispiels der Fig. 6 um eine dritte Lichtquelle und einen dritten Strahlablenkungsabschnitt und zeigt eine Ansicht entsprechend der Ansicht der Fig. 7B. Hier ist eine dritte Lichtquelle 4c zusammen mit einem Strahlablenkungsabschnitt 3c (beispielsweise wiederum ein Off-Axis-Parabolspiegel als Kollimator) bereitgestellt, um das Hologramm 2 aus einer dritten Richtung zu beleuchten. Dabei wird in Fig. 8 nur ein Teil des Hologramms 2 beleuchtet, Randstrahlen sind mit 7c gekennzeichnet. Die Lichtquelle 4c kann beispielsweise eine gelbe Lichtquelle für eine Funktion als Fahrtrichtungsanzeiger sein. Eine holographische Struktur für diese Funktion muss dementsprechend nur in den beleuchteten Streifen des Hologramms (eingegrenzt durch die Randstrahlen 7c) bereitgestellt sein. Wird hier wie in dem Beispiel mit Bremslicht, Schlusslicht und Fahrtrichtungsanzeiger für den Blinker eine andere Wellenlänge verwendet, kann auch für diese weitere Wellenlänge eine weitere Hologrammschicht, welche sich in einem geringen Abstand zu dem Hologramm 2 befindet oder auf diesem aufgebracht ist, verwendet werden. Die Hologrammfunktion können jedoch auch in eine einzelne Hologrammschicht geschrieben werden.

In den obigen Ausführungsbeispielen wurde eine gekrümmte Spiegelfläche insbesondere ein Off-Axis-Paraboloidspiegel, zur Strahlablenkung in einem Strahlablenkungsbereich verwendet. Nunmehr werden unter Bezugnahme auf die Figuren 8 und 9 Alternativen hierzu erläutert. Die Figuren 8 und 9 zeigen jeweils eine Querschnittsansicht entsprechend der Ansicht der Figuren 1 und 2.

In der Fig. 9 ist eine diffraktive Off-Axis-Reflexionslinse 8 als Strahlablenkungsabschnitt bereitgestellt, beispielsweise ein Hologramm, welches z.B. auch einzelne Facetten oder einzelne Bereiche für verschiedene Lichtquellen 4 bereitstellen kann. Lichtstrahlen 6a von der Lichtquelle 4 werden durch die Reflexionslinse 8 als ebene Welle 6b zu dem Hologramm 2 gelenkt. Auch andere diffraktive Elemente als Hologramme können verwendet werden. Da die Ablenkung des Lichtes von der von der Lichtquelle 4 ausgehenden Kugelwelle (6a) zu der ebenen Welle 6b hier über einen diffraktiven (beugenden) Wechselwirkungsmechanismus erfolgt, ist sowohl der Ablenkwinkel als auch die Effizienz von der Wellenlänge abhängig. Erstgenanntes, d.h. die Abhängigkeit des Ablenkwinkels, kann zumindest teilweise eine Dispersion des Hologramms 2 kompensieren, zumindest für den in Fig. 9 angezeigten mittleren Strahl 6a, welcher von der Lichtquelle 4 ausgeht. Verglichen mit Ausführungsformen mit Spiegeln wie in Fig. 1 kann jedoch ein größerer Bauraum benötigt werden, zumindest sofern die diffraktive Reflexionslinse 8 plan ist und parallel zum Hologramm 2 liegt.

Eine Variante hierzu ist in Fig. 10 gezeigt, bei der statt der Reflexionslinse 8 ein in Transmission anordnendes arbeitendes diffraktives Element 8', beispielsweise ein Transmissionshologramm, verwendet wird, das Lichtstrahlen 6a von der Lichtquelle 4, beispielsweise eine Kugelwelle, zu einer ebenen Welle ablenkt, die an der Vorderseite des Lichtleitkörpers 1 reflektiert und zu dem Hologramm 2 gelenkt wird. Hierdurch kann die Dicke des Lichtleitkörpers 1 verringert werden. Zudem kann das diffraktive Element 8' zusammen mit dem Hologramm 2 beispielsweise einer gemeinsamen Folie angeordnet sein. Nachteil ist, dass als transmittierendes Element im Regelfall die Effizienz des Elements 8' wellenlängenabhängig ist.

Derartige diffraktive Elemente 8, 8' können auch in anderen dargestellten Ausführungsbeispielen, beispielsweise in Fig. 5, Fig. 6 oder Fig. 7 eingesetzt werden.

Aus der obigen Beschreibung verschiedener Variationen und Abwandlungen ist ersichtlich, dass die Ausführungsbeispiele lediglich der Veranschaulichung dienen und nicht als einschränkend zu auszulegen sind.

## Patentansprüche

1. Leuchteinrichtung für ein Fahrzeug, umfassend:
eine Lichtquellenanordnung (4), welche angeordnet ist, Licht in Richtung eines ersten Halbraums abzustrahlen,
ein Reflexionshologramm (2), welches eingerichtet ist, bei Beleuchtung in einer Richtung, welche in einem zu dem ersten Halbraum entgegengesetzten Halbraum zeigt, eine Leuchtsignatur zu erzeugen, und
einen einstückigen Lichtleitkörper (1) mit einem Strahlablenkungsabschnitt (3), welcher eingerichtet ist, das Licht von der Lichtquellenanordnung (4) in der Richtung des zweiten Halbraums auf das Hologramm (2) zu lenken, wobei der Strahlablenkungsabschnitt (3) einen durch eine gekrümmte Oberfläche des Lichtleitkörpers (1) gebildeten gekrümmten Spiegel umfasst,
wobei der Strahlablenkungsabschnitt (3) ausgestaltet ist, von der Lichtquellenanordnung (4) als Kugelwelle ausgehendes Licht als ebene Welle auf das Hologramm (2) zu lenken.

2. Leuchteinrichtung nach Anspruch 1, wobei der Spiegel einen Abschnitt eines Paraboloidspiegels umfasst.

3. Leuchteinrichtung nach einem der Anspruch 1 oder 2, wobei die Lichtquellenanordnung eine Mehrzahl von Lichtquellen umfasst, wobei der Strahlablenkungsabschnitt getrennte Abschnitte für die Mehrzahl von Lichtquellen umfasst.

4. Leuchteinrichtung nach Anspruch 3, wobei die mehreren Abschnitte eingerichtet sind, Licht unter verschiedenen Winkeln auf das Hologramm (2) zum wahlweisen Erzeugen verschiedener Leuchtsignaturen zu lenken.

5. Leuchteinrichtung nach einem der Ansprüche 1-4, wobei der Strahlablenkungsabschnitt (3; 8) eingerichtet ist, zumindest einen Teil des Lichts von der Lichtquellenanordnung (4) über eine Reflexion an einer Seite des Lichtleitkörpers (1) zu dem Hologramm zu lenken.

6. Leuchteinrichtung nach Anspruch 5, wobei die Seite eine dem Hologramm gegenüberliegende Seite des Lichtleitkörpers umfasst.

7. Leuchteinrichtung nach Anspruch 5 oder 6, wobei das Hologramm (2) einen Abschnitt mit einer Effizienz zwischen 45% und 55% aufweist, wobei der Lichtleitkörper (1) eingerichtet ist, von dem Abschnitt mit der Effizienz zwischen 45% und 55% nicht gebeugtes Licht zu einem weiteren Abschnitt des Hologramms (2) zu lenken.

8. Leuchteinrichtung nach einem der Ansprüche 1-7, wobei der Lichtleitkörper (1) eine gekrümmte Lichteinkoppelfläche (7b) zum Einkoppeln von Licht von der Lichtquelle aufweist, wobei ein Krümmungsmittelpunkt der Lichteinkoppelfläche (7b) am Ort einer Lichtquelle der Lichtquellenanordnung (4) liegt.

9. Leuchteinrichtung nach einem der Ansprüche 1-8, wobei der Lichtleitkörper (1) eine gekrümmte Lichteinkoppelfläche (7b) zum Einkoppeln von Licht von der Lichtquelle aufweist, wobei eine Kombination aus der gekrümmten Lichteinkoppelfläche (7b) und des Strahlablenkungsabschnitts(3) ausgestaltet ist, von der Lichtquellenanordnung (4) als Kugelwelle ausgehendes Licht als ebene Welle auf das Hologramm (2) zu lenken.

10. Leuchteinrichtung nach einem der Ansprüche 1-9, wobei die Lichtquellenanordnung (4) durch eine oder mehrere näherungsweise Punktlichtquellen gebildet ist.

11. Leuchteinrichtung nach einem der Ansprüche 1 bis 10, wobei der Lichtleitkörper (1) aus einem Kunststoff mit einem Brechungsindex von näherungsweise 1,5 gefertigt ist.

## Claims

1. Light-emitting device for a vehicle, comprising:
a light source arrangement (4), which is arranged to emit light in the direction of a first half-space,
a reflection hologram (2), which is configured to produce a light-emission signature during illumination in a direction that faces in a half-space that it located opposite the first half-space, and
a one-piece light-guiding body (1) with a beam deflection portion (3), which is configured to direct the light from the light source arrangement (4) in the direction of the second half-space onto the hologram (2), wherein the beam deflection portion (3) comprises a curved mirror formed by a curved surface of the light-guiding body (1),
wherein the beam deflection portion (3) is designed to direct light coming from the light source arrangement (4) as a spherical wave onto the hologram (2) as a plane wave.

2. Light-emitting device according to Claim 1, wherein the mirror comprises a portion of a parabolic mirror.

3. Light-emitting device according to either of Claims 1 or 2, wherein the light source arrangement comprises a plurality of light sources, wherein the beam deflection portion comprises separate portions for the plurality of light sources.

4. Light-emitting device according to Claim 3, wherein the plurality of portions are configured to direct light at different angles onto the hologram (2) for selectively producing different light-emission signatures.

5. Light-emitting device according to any of Claims 1-4, wherein the beam deflection portion (3; 8) is configured to direct at least one part of the light from the light source arrangement (4) to the hologram via a reflection at one side of the light-guiding body (1).

6. Light-emitting device according to Claim 5, wherein the side comprises a side of the light-guiding body located opposite the hologram.

7. Light-emitting device according to Claim 5 or 6, wherein the hologram (2) has a portion with an efficiency of between 45% and 55%, wherein the light-guiding body (1) is configured to direct non-diffracted light from the portion with the efficiency of between 45% and 55% to a further portion of the hologram (2).

8. Light-emitting device according to any of Claims 1-7, wherein the light-guiding body (1) has a curved light input coupling face (7b) for coupling in light from the light source, wherein a centre of curvature of the light input coupling face (7b) is located at the location of a light source of the light source arrangement (4).

9. Light-emitting device according to any of Claims 1-8, wherein the light-guiding body (1) has a curved light input coupling face (7b) for coupling in light from the light source, wherein a combination of the curved light input coupling face (7b) and the beam deflection portion (3) is designed to direct light coming from the light source arrangement (4) as a spherical wave onto the hologram (2) as a plane wave.

10. Light-emitting device according to any of Claims 1-9, wherein the light source arrangement (4) is formed by one or more approximate point light sources.

11. Light-emitting device according to any of Claims 1 to 10, wherein the light-guiding body (1) is produced from a plastic having a refractive index of approximately 1.5.

## Revendications

1. Dispositif d'éclairage pour un véhicule, comprenant :
un agencement de sources lumineuses (4), lequel est disposé de manière à émettre de la lumière en direction d'un premier demi-espace,
un hologramme de réflexion (2), lequel est conçu pour générer une signature lumineuse lors d'un éclairage dans une direction pointant vers un demi-espace opposé au premier demi-espace, et
un corps de guidage de lumière (1) d'un seul tenant doté d'une section de déviation de faisceau (3), laquelle est conçue pour diriger la lumière provenant de l'agencement de sources lumineuses (4) vers l'hologramme (2) dans la direction du second demi-espace, la section de déviation de faisceau (3) comprenant un miroir courbe formé par une surface courbe du corps de guidage de lumière (1),
la section de déviation de faisceau (3) étant conçue pour diriger la lumière émanant de l'agencement de sources lumineuses (4) sous forme d'onde sphérique vers l'hologramme (2) sous forme d'onde plane.

2. Dispositif d'éclairage selon la revendication 1, dans lequel le miroir comprend une partie d'un miroir paraboloïdal.

3. Dispositif d'éclairage selon l'une des revendications 1 ou 2, dans lequel l'agencement de sources lumineuses comprend une pluralité de sources lumineuses, la section de déviation de faisceau comprenant des sections séparées pour la pluralité de sources lumineuses.

4. Dispositif d'éclairage selon la revendication 3, dans lequel la pluralité de sections sont conçues pour diriger la lumière sous différents angles vers l'hologramme (2) afin de générer sélectivement différentes signatures lumineuses.

5. Dispositif d'éclairage selon l'une des revendications 1 à 4, dans lequel la section de déviation de faisceau (3 ; 8) est conçue pour diriger au moins une partie de la lumière provenant de l'agencement de sources lumineuses (4) vers l'hologramme par l'intermédiaire d'une réflexion sur un côté du corps de guidage de lumière (1).

6. Dispositif d'éclairage selon la revendication 5, dans lequel ledit côté comprend un côté du corps de guidage de lumière qui est opposé à l'hologramme.

7. Dispositif d'éclairage selon la revendication 5 ou 6, dans lequel l'hologramme (2) présente une section ayant une efficacité comprise entre 45 % et 55 %, le corps de guidage de lumière (1) étant conçu pour diriger la lumière non diffractée par la section ayant une efficacité comprise entre 45 % et 55 % vers une autre section de l'hologramme (2).

8. Dispositif d'éclairage selon l'une des revendications 1 à 7, dans lequel le corps de guidage de lumière (1) présente une surface d'injection de lumière courbe (7b) pour l'injection de lumière provenant de la source lumineuse, un centre de courbure de la surface d'injection de lumière (7b) étant situé à l'emplacement d'une source lumineuse de l'agencement de sources lumineuses (4).

9. Dispositif d'éclairage selon l'une des revendications 1 à 8, dans lequel le corps de guidage de lumière (1) présente une surface d'injection de lumière courbe (7b) pour l'injection de lumière provenant de la source lumineuse, une combinaison de la surface d'injection de lumière courbe (7b) et de la section de déviation de faisceau (3) étant configurée pour diriger la lumière provenant de l'agencement de sources lumineuses (4) sous forme d'onde sphérique vers l'hologramme (2) sous forme d'onde plane.

10. Dispositif d'éclairage selon l'une des revendications 1 à 9, dans lequel l'agencement de sources lumineuses (4) est formé par une ou plusieurs sources lumineuses approximativement ponctuelles.

11. Dispositif d'éclairage selon l'une des revendications 1 à 10, **caractérisé en ce que** le corps de guidage de lumière (1) est fabriqué à partir d'une matière plastique ayant un indice de réfraction d'environ 1,5.
